# EUROPEAN PATENT APPLICATION

(11) **EP 4 624 281 A1**
(43) Date of publication of application: **01.10.2025**
(21) Application number: 25160314.8
(22) Date of filing: 26.02.2025
(51) Int. Cl.: B60S 1/08

(54) **SYSTEM AND METHOD FOR CONTROLLING A WINDSHIELD WIPER OF A VEHICLE FIELD**

(30) Priority: 27.03.2024 US 202418617990
(71) Applicant: Deere & Company, Moline, IL 61265 (US)
(72) Inventor: Gunjal, Sagar, Mannheim (DE)
(74) Representative: Holst, Sönke

(57) **Abstract**

The system comprises a controller, an electronic data processor, or both that are configured to control the wiper motor consistent with an operator-defined wiping intensity request. A user interface is configured to input the operator-defined wiping intensity request. In a learning mode, the electronic data processor can learn or record the operator-defined wiping intensity request associated with a respective operator identifier for a series of sampling intervals during operation of the vehicle. First, in the learning mode, a windshield clarity detector is configured to detect an observed clarity state of the windshield of a vehicle for the series of respective sampling intervals to augment the operator-defined wiping intensity request associated with a respective operator identifier. Second, in the learning mode for the series of sampling intervals, the electronic data processor configured to store in a data storage device the augmented observed clarity state of the windshield, and the operator-defined wiping intensity that are associated with a respective operator identifier.

## Description

### FIELD

This disclosure relates to a system and method for controlling a windshield wiper of a vehicle.

### Background

In certain prior art, the windshield wiper is controlled to operate: (a) intermittently with a preset timed cycle of active and inactive duration, or (b) continuously at several fixed speeds; the operator may find it difficult to find an operating state that aligns with the operator's preference or expectations as to the clarity state of the windshield. In some prior art, the windshield wiper is controlled automatically by rain sensors without the ability for the operator to provide input to regulate the automation aligns with the operator's preference or expectations as to the clarity state of the windshield. Therefore, there is a need for an improved system and method for controlling a windshield wiper of a vehicle.

### Summary

In accordance with one embodiment, a system for controlling a windshield wiper comprises a wiper motor having a rotor, where the rotor is mechanically coupled to the windshield wiper. The system comprises a controller, an electronic data processor, or both that are configured to control the wiper motor consistent with an operator-defined wiping intensity request of the windshield wiper. A user interface or switch (e.g., multifunction switch) is configured to input the operator-defined wiping intensity request. In a learning mode, the electronic data processor can learn or record the operator-defined wiping intensity request associated with a respective operator identifier for a series of sampling intervals during operation of the vehicle. First, in the learning mode, a windshield clarity detector is configured to detect an observed clarity state of the windshield of a vehicle for the series of respective sampling intervals to augment the operator-defined wiping intensity request associated with a respective operator identifier. Second, in the learning mode for the series of sampling intervals, the electronic data processor configured to store (e.g., for future reference) in a data storage device the augmented observed clarity state (e.g., observed rainfall coverage) of the windshield, and the operator-defined wiping intensity that are associated with a respective operator identifier.

### Brief Description of the Drawings

FIG. 1 is a block diagram one embodiment of a system for controlling a windshield wiper of a vehicle in accordance with the disclosure.
FIG. 2 is a flow chart of one embodiment of a method for controlling a windshield wiper of a vehicle in accordance with the disclosure.

### Detailed Description

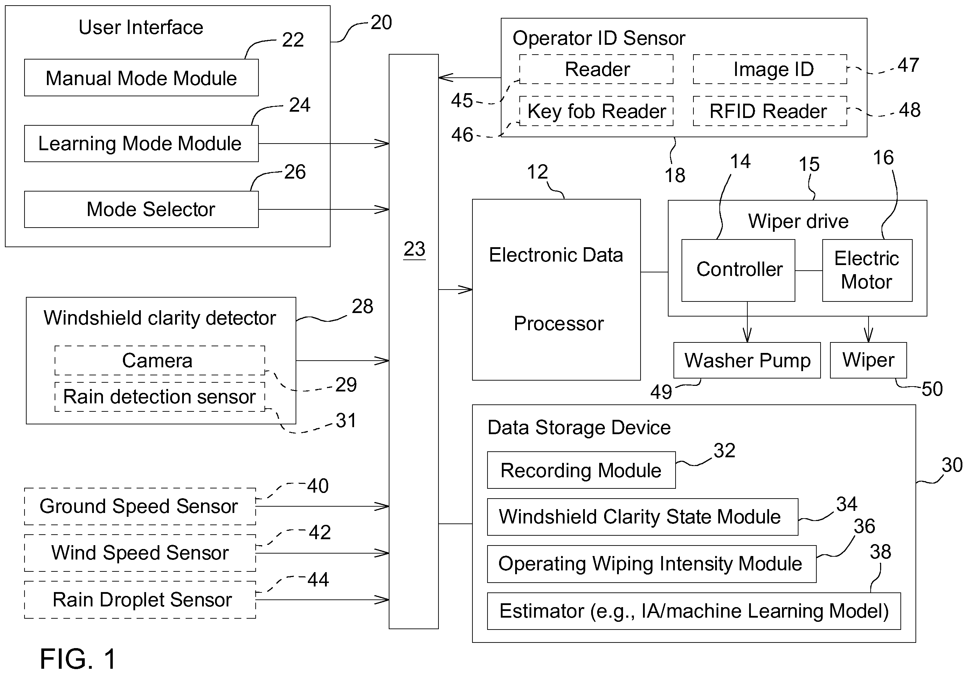

In accordance with one embodiment, FIG. 1 illustrates a system 11 for controlling a windshield wiper 50 that comprises a wiper electric motor 16 having a rotor. Further, the system 11 has a controller 14, an electronic data processor 12, or both that are configured to control the wiper electric motor 16 consistent with an operator-defined wiping intensity request. A user interface 20 or switch (e.g., multifunction switch) is configured to input the operator-defined wiping intensity request. In a learning mode, the electronic data processor 12 can learn or record the operator-defined wiping intensity request associated with a respective operator identifier for a series of sampling intervals during operation of the vehicle. First, in the learning mode, a windshield clarity detector 28 is configured to detect an observed clarity state of the windshield of a vehicle for the series of respective sampling intervals to augment the operator-defined wiping intensity request associated with a respective operator identifier. Second, in the learning mode for the series of sampling intervals, the electronic data processor 12 configured to store in a data storage device 30 the augmented observed clarity state (e.g., observed rainfall coverage) of the windshield, and the operator-defined wiping intensity that are associated with a respective operator identifier.

In FIG. 1, the system 11 comprises a user interface 20, windshield clarity detector 28, one or more optional sensors (40, 42, 44), an electronic data processor 12, and a data storage device 30 that are coupled to a data bus 23 to support communications between or among the user interface 20, the windshield clarity detector 28, and one or more optional sensors (40, 42, 44), the electronic data processor 12, and the data storage device 30. The sensors (40, 42, 44) are indicated in dashed lines to show that each is optional.

The electronic data processor 12 implements algorithms, executes software instructions, and/or performs other logic or functionality of the system 11 described in further detail below. The electronic data processor 12 may be any type of processor configured to execute program code or software instructions such as those stored in the data storage device 30. In an example embodiment, the electronic data processor 12 may include an electronic data processor, a digital signal processor, microprocessor, a microcontroller, a programmable logic array (PLA), field programmable gate array (FPGA), a system on a chip (SOC), a logic circuit, an arithmetic logic unit, an application specific integrated circuit (ASIC), a digital signal processor (DSP), system on a chip, a proportional-integral-derivative (PID) controller, or another data processing device.

The data storage device 30 may include any magnetic, electronic, or optical device for storing data. For example, the data storage device 30 may include an electronic data storage device, an electronic memory, non-volatile electronic random access memory, one or more electronic data registers, data latches, a magnetic disc drive, a hard disc drive, a solid-state storage drive, an optical disc drive, or the like. The electronic data processor 12 outputs results of algorithms and other functionality of the system to the data bus 23. The system 11 may be installed on or incorporated into a vehicle, such as an off-road vehicle with a windshield that the system 11 can wipe or clean. The electric motor 16 is directly or indirectly coupled to the wiper 50 to move the wiper 50 across the windshield via a wiper arm, which may be rotatably connected (e.g., via a bearing) to a body or structural portion of the vehicle, such as an off-road vehicle, equipment or heavy-equipment. In one configuration, the wiper 50 comprises a frame (e.g., polymer, plastic, composite, or metal) with synthetic rubber member, elastomer or natural rubber member attached or removably attached to the wiper arm.

The electronic data processor 12 is configured to execute software instructions, software or a program that is storable or capable of being stored in the data storage device 30. The data storage device 30 may store software modules, such as a recording module 32, a windshield clarity state module 34, an operating wiping intensity module 36, and an estimator 38 (e.g., artificial intelligence (AI) machine learning module). The recording module 32 is configured to store or record a sequence of user selections or entries that an operator or user makes during a learning mode of the system 11, such as an operator-defined wiping intensity request associated with a respective operator identifier for a series of sampling intervals during operation of the vehicle. The windshield clarity state module 34 is configured to evaluate the reference images of windshield or the visible vehicle portions as viewed from the inside of the vehicle to provide an estimate of clarity, obscurity, percentage of visibility, or another metric indicative of windshield wiping performance. The operator windshield wiping intensity module 36 is configured to evaluate operator inputs, settings, and entries of into the user interface 20 during the manual mode or learning mode to determine a score or range score of operator windshield wiping intensity on a scale, such that an equivalent level, commensurate level or comparable level can be recalled or commanded of the system 11 during the automated mode of windshield wiping.

In one embodiment, the estimator 38 comprises a comprises an artificial intelligence or machine learning module that is optional and can be used for purposes of training a model during the learning mode such that the electronic data processor 12 and trained model are available for execution during the automated mode.

The user interface 20 may comprise any of the following: an electronic display, a touchscreen electronic display, a multifunction switch, a stalk with multiple switches, or a panel of switches. As illustrated in FIG. 1, the user interface 20 supports a manual mode module 22, a learning mode module 24 and a mode selector 26, which comprise digital logic circuits or software instructions stored in the data storage device 30 and/or within data storage (e.g., electronic memory) within the user interface or electronic display, where digital loc or software instructions in the manual mode module, 11, the learning mode module 24, or the mode selector 26.

The user interface 20 has a manual mode module 22 that identifies operator manual selection of the switches or controls associated with the user interface 20, such as if the operator operates the system 11 in a manual mode based on operator perception or a learning mode to teach or train the system 11 in accordance with the operator perception and/or preferences of a corresponding operator identifier.

The learning mode module 24 is configured to record the operator's manual selection of the switches or controls associated with the user interface 20, such as if the operator operates the system 11 in a learning mode to teach or train the system 11 in accordance with the operator's manual selection of switches in accordance with the operator's perception and/or preferences (e.g., of a corresponding operator identifier), such as windshield clarity preferences or percentage of visibility during a rain event, snow event or precipitation event.

The mode selector 26 supports the operator's selection of the manual mode, the learning mode or the automated mode (e.g., automatic mode).

The windshield clarity detector 28 may comprise a digital imaging device, such as a video imaging device, a camera 29 or a rain detection sensor 31. For example, the camera 29 or imaging device may be positioned inside the cab or cockpit of the vehicle with a lens, imaging sensor, or charged-coupled-device (CCD) that is facing the outside and windshield. The camera 29 or imaging device may provide images to the electronic data processor 12 to estimate the percentage visibility or percentage of visibility-blocking rain, snow, precipitation or moisture coverage on the window. In one configuration, a reference image, fiducial, pattern, mask, or mark is stored in the data storage device 30, where the reference image may comprise a view of front hood, front fender, implement, bucket, blade or a marked portion of the vehicle (e.g., with a fiducial, pattern, mask or mark) as viewed through an entirely clean and clear windshield with complete visibility (e.g., approximately 100 percent visibility), or obscured, blurred or degraded reference images, that comprise the same view of the front hood, fender, implement bucket, or a marked portion of the vehicle as viewed through a partially obscured, blurred or degraded reference image to a known reference level, known percentage, known metric or lesser percent visibility than complete visibility.

The optional ground speed sensor 40 may comprise one or more of the following: (1) a speedometer, (2) an odometer associated with a timer, (3) a magnetic sensor (e.g., Hall Effect sensor) that is configured to sense the rotation of a magnet attached to the wheel or hub, or (4) a location-determining receiver (e.g., global navigation satellite system 11 receiver) that is configured to receive a wireless correction signal. The optional wind speed sensor 42 may comprise an ultrasonic anemometer to provide wind speed and wind direction or wind velocity readings, which can be corrected for the vehicle heading (e.g., yaw angle and ground speed provided by the ground speed sensor 40, alone or together with the yaw angle of the location-determining receiver affixed to the vehicle).

The optional rain droplet sensor 44 may comprise a panel that acts as a variable resistance or variable capacitance that changes in response to the raindrops or precipitation that is deposited or collected on the panel. For example, the panel may comprise a dielectric substrate layer that supports parallel rows of conductive traces on the surface of the substrate layer. The rain droplet sensor 44 further comprises a logic (circuit) board with a comparator that determines if the observed resistance of the panel exceeds a threshold or not. If the rain droplet sensor 44 exceeds a threshold (e.g., threshold resistance), which indicates a drier or dry state, the raindrop sensor provides an output signal (e.g., logic state or contact closure) sufficient to maintain a wiper off state or trigger a wiper deactivation state of wiper 50. However, if the observed resistance of the panel is less than or equal to a threshold (e.g., threshold resistance), the rain droplet sensor 44 indicates that the rain droplet sensor 44 provides an output signal sufficient to activate the wiper 50 (e.g., from a rest state or inactive state) or to increment the wiper motion intensity level (e.g., increase speed or duty cycle from an already active state), a key fob reader 46 or an image identifier 47.

The operator identification module 18 (e.g., operator identification sensor) may be coupled to the data bus 23 to provide input data to the electronic data processor 12 via the data bus 23, via the operator identification sensor 18, via the data storage device 30 or both. In one embodiment, the operator identification module 18 comprises one or more of the following: (1) a radio frequency identification tag reader 48 or another reader 45, or (2) a key fob reader 46, or (3) image identifier 47 (e.g., image recognition device) that is used in a manner compliant with applicable privacy and biometric identification laws and regulations. The operator identification sensor 18 can read a radio frequency identification tag or key fob that is assigned to a corresponding operator, such that the operator can save personal preferences and settings for a vehicle or fleet of vehicles. The personal preferences or settings can be stored in the data storage device 30 locally on the vehicle or at a central server or in the cloud, where the central server and cloud can be accessed via a wireless communications network alone, or a wireless communications network in conjunction with the Internet, data packet communications network, fiber optic communications network, or landline communications network. A wireless communications device (e.g., transceiver) may be coupled to the data bus 27 for communicating with the cloud or central server via the wireless communications network. The image identifier 47 may comprise a facial recognition module that allows the electronic data processor 12 to recognize or identify a particular operator with a corresponding operator identifier based upon the geometry, two-dimensional points or three-dimensional point cloud associated with the operator's unique facial geometry.

In one embodiment, the electronic data processor 12 is coupled to the wiper drive 15 module. In turn, the wiper drive 15 module comprises a controller 14 (e.g., motor controller or inverter) that is coupled to an electric motor 16.

In FIG. 1, a controller 14 or motor controller 14 is configured to control the wiper motor consistent with an operator-defined wiping intensity request. In one configuration, the motor comprises any of the following electric motors 16: an alternating-current (AC), permanent magnet synchronous motor or permanent magnet direct-current (DC) motor, a shunt-wound direct current motor, a brushed direct-current (DC) motor, a brushless DC motor, or a brushless AC electric motor. In one example, for an AC motor, the motor controller 14 comprises an inverter that converts DC current into AC current, such as pulse-width modulated (PWM) AC current (e.g., of one or more phases) to drive the AC electric motor 16 at a target rotor speed, at target rotor velocity, and/or a target rotor torque based on a duty cycle and fundamental frequency of the PWM AC current. In another example, the motor controller 14 for an AC motor comprises a variable-voltage, variable-frequency controller. For instance, the AC controller may operate at different frequencies (e.g., fundamental frequencies or pulse frequencies), at different signal magnitude outputs (e.g., at different voltage output levels based on the duration of on pulse widths or duty cycle of pulse width modulation) to vary rotational speed of the rotor of the motor 16. Alternatively, the AC controller 14 may generate fixed voltage (e.g., fixed pulse widths) and/or fixed fundamental frequency (e.g., of the PWM) to operate the rotor of electric motor 16 at a fixed rotational speed.

In some embodiments, the electric motor 16 for the wiper can be configured as a direct current (DC) motor or DC electric machine, where brushed and brushless DC motors are commercially available. For example, in a DC brushed machine, the stator has permanent magnets; the rotor has coils (e.g., windings of insulated conductors); where the rotor has an armature that is powered by brushes to energize the coils of the rotor or armature in a switching sequence of opposite polarities to generate rotation or torque of the rotor. Further, the motor controller 14 may comprise a set of semiconductor switches, such as half-bridge circuit to provide the switching sequence to induce rotation of the DC motor. In some configurations, an inverter with a fixed frequency (PWM) may provide current control for a DC motor. In other cases, an H-bridge configuration can be used to control an DC motor, where the DC motor terminals are coupled between the output terminals (e.g., switched output terminals of two semiconductor transistors of each half-bridge, such as the source and drain coupled together at a common node) of two half-bridge switch circuits, where the input terminals of each half-bridge are coupled to DC bus.

A user interface 20 or switch (e.g., multifunction switch) is configured to input the operator-defined wiping intensity request. For example, the user interface 20 may comprise one or more of the following: an electronic display, a touch screen display, a liquid crystal display that is backlit by a light emitting diodes, a keypad, a keyboard, a pointing device (e.g., electronic mouse), switches, a command center panel with switches, a multifunctional switch (e.g., stalk switch assembly of multiple switches mounted on a steering column) or the like. The switches may be configured as physical electrical or electronic switches that an operator can interact with or virtual switches that are displayed on the electronic display that the operator can interact with by clicking, touching or entering other inputs via the user interface 20.

The user interface 20 or switches may be configured in accordance with various examples that may applied separately or cumulatively. Under a first example, the user interface 20 has a first switch that controls the manual activation or deactivation of the electric motor 16 or wiper.

Under a second example, a second switch is configured to control an automated mode or automatic activation or deactivation of the electric motor 16 or wiper in accordance with one or more of the following: (a) one or more sensor inputs (e.g., rainfall or rain droplet sensor 44), (b) the augmented observed clarity state (e.g., observed rainfall coverage) of the windshield, and (c) the operator-defined wiping intensity that are associated with a respective operator identifier.

Under a third example, the user interface 20 has a third switch configured to select a learning mode or an automated mode.

Under a fourth example, (in the user interface 20) a primary switch assembly is configured to control the speed or rate of the electric motor 16 or wiper in accordance with one or more preset speeds or preset rates of wiper movement (e.g., in accordance with a learning mode).

Under a fifth example, (in the user interface 20) a secondary switch assembly is configured to control whether the wiper movement of wiper 50 is intermittently on or active for a corresponding first preset duration and corresponding first wiper speed in which the wiper movement of wiper 50 is active or a corresponding second preset duration and corresponding second wiper speed in which the wiper is active, where the first preset duration is less than the second preset duration and where the first wiper speed and the second wiper speed are equal to each other (e.g., in accordance with a learning mode).

Under a sixth example, a secondary or tertiary switch assembly is configured to control whether the wiper movement of wiper 50 is intermittently on or active for a corresponding first preset duration and corresponding first wiper speed in which the wiper movement is active or a corresponding second preset duration and corresponding second wiper speed in which the wiper is active, where the first preset duration is less than the second preset duration and where the first wiper speed is less than or equal to the second wiper speed (e.g., in accordance with a learning mode).

Under a seventh example, a switch (e.g., push button switch, such as normally open push button switch) is used to control activation of the washer electric pump 49 to dispense provide window washing fluid on or to the windshield via one or more nozzles or ports.

In a learning mode, an electronic data processor 12 is configured to learn or record the operator-defined wiping intensity request associated with a respective operator identifier for a series of sampling intervals during operation of the vehicle. In the learning mode, a windshield clarity detector 28 is configured to detect an observed clarity state of the windshield of a vehicle for the series of respective sampling intervals to augment the operator-defined wiping intensity request associated with a respective operator identifier. In the learning mode for the series of sampling intervals, the electronic data processor 12 is configured to store in a data storage device 30 the augmented observed clarity state (e.g., observed rainfall coverage) of the windshield, and the operator-defined wiping intensity that are associated with a respective operator identifier. The data storage device 30 is coupled to the electronic data processor 12 via a data bus 23.

The operator-defined wiping intensity comprises any of the following: a rotational speed of the rotor, a wiping active interval or an intermittent duty cycle (e.g., percentage of total time that the windshield motor is active or time period or interval between each activation, pass, swipe or complete to-and-fro cycle, or back-and-forth cycle of the blade of the wiper) of the rotor, or a wiper intensity level.

In accordance with another aspect of the invention, additional, supplemental or optional sensors may be used to augment operator-defined wiping intensity with supplemental sensor data, such as a ground speed sensor 40, a wind speed sensor 42, rain droplet sensor 44 (e.g., rain droplet speed sensor and rain droplet size sensor).

In an automated mode, an operator identification module 18 is configured to identify the operator of the vehicle based upon an radio frequency identification tag, a fob, remote electronic identifier, wireless key, or operator entry or selection of operator identifier in the user interface 20. Further, during a session (e.g., vehicle is started (initialized) and operated in a continuous manner after the starting) in which the identified operator operates the vehicle and activates the automated mode, the electronic data processor 12 retrieves or accesses the (previous) stored augmented observed clarity state of the windshield, the (previous) operator-defined wiping intensity, and the (previous) supplemental sensor data (e.g., previous estimated ground speed, wind speed or rain droplet sensor 44 data), that are associated with a respective operator identifier; the electronic data processor 12 is configured to control or command the controller 14 with a (present or next) simulated operator-defined wiping intensity derived from applying a learning model (e.g., artificial intelligence model or machine learning model): to the (previous) stored augmented observed clarity state of the windshield, to the (previous) operator-defined wiping intensity, and to the (previous) supplemental sensor data, that are associated with a respective operator identifier and to the (present) observed clarity state of the windshield and to the (present) supplemental sensor data, that are associated with a respective operator identifier (e.g., where the previous and present observed clarity states must be commensurate with each other to be used for present control).

The operator-defined wiping intensity comprises any of the following: a rotational speed of the rotor, a wiping active interval or an intermittent duty cycle (e.g., percentage of total time that the windshield motor is active or time period or interval between each activation, pass, swipe or complete to-and-fro cycle, or back-and-forth cycle of the blade of the wiper) of the rotor, or a wiper intensity level.

A ground speed sensor 40 for estimating a ground speed of the vehicle may comprise one or more of the following: speedometer, an odometer, a dead-reckoning navigation system 11, location determining receiver or global navigation satellite system 11 (GNSS) receiver. In the learning mode, the electronic data processor 12 is configured to associated and store the estimated ground speed with the respective the operator-defined wiping intensity request associated for the series of sampling intervals.

A wind speed sensor 42 or wind velocity sensor can estimate a wind speed, wind speed and direction, or wind velocity around or in the vicinity of the exterior of the vehicle or the windshield. In the learning mode, the electronic data processor 12 is configured to associate and store the estimated wind speed with the respective the operator-defined wiping intensity request associated for the series of sampling intervals.

The sensors may comprise a rain droplet sensor 44 for estimating a rain droplet speed and rain droplet size or rain droplet volume around or in the vicinity of the exterior of the vehicle or the windshield. In the learning mode, the electronic data processor 12 is configured to associate and to store the estimated rain droplet speed with the respective the operator-defined wiping intensity request associated for the series of sampling intervals.

In the automated mode, the electronic data processor 12 is configured to execute software instructions stored in the data storage device 30 or elsewhere in accordance with various techniques, which may be applied separately or cumulatively.

Under a first technique in an automated mode, an operator identification module 18 is configured to identify the operator of the vehicle based upon an radio frequency identification tag, a fob, remote electronic identifier, wireless key, or operator entry or selection of operator identifier in the user interface 20. During a session in which the identified operator operates the vehicle and activates the automated mode, the electronic data processor 12 is configured to retrieve or access the (previous) stored augmented observed clarity state of the windshield, the (previous) operator-defined wiping intensity, and the (previous) estimated ground speed, that are associated with a respective operator identifier. Further, the electronic data processor 12 is configured to control or command the controller 14 with a (present or next) simulated operator-defined wiping intensity derived from applying a learning model: to the (previous) stored augmented observed clarity state of the windshield, to the (previous) operator-defined wiping intensity, and to the (previous) estimated ground speed, that are associated with a respective operator identifier and to the (present) observed clarity state of the windshield and to the (present) estimated ground speed, that are associated with a respective operator identifier (e.g., where the previous and present observed clarity states must be commensurate with each other to be used for present control).

Under a second technique in an automated mode, an operator identification module 18 is configured to identify the operator of the vehicle based upon an radio frequency identification tag, a fob, remote electronic identifier, wireless key, or operator entry or selection of operator identifier in the user interface 20. During a session in which the identified operator operates the vehicle and activates the automated mode, the electronic data processor 12 is configured to retrieve or to access the stored (previous) augmented observed clarity state of the windshield, the (previous) operator-defined wiping intensity, and the (previous) estimated wind speed, that are associated with a respective operator identifier. Further, the electronic data processor 12 is configured to control or command the controller 14 with a (present or next) simulated operator-defined wiping intensity derived from applying a learning model: to the (previous) stored augmented observed clarity state of the windshield, to the (previous) operator-defined wiping intensity, and to the (previous) estimated wind speed, that are associated with a respective operator identifier and to the (present) observed clarity state of the windshield and to the (present) estimated wind speed, that are associated with a respective operator identifier(e.g., where the previous and present observed clarity states must be commensurate with each other to be used for present control).

Under a third technique in an automated mode, an operator identification module 18 is configured to identify the operator of the vehicle based upon an radio frequency identification tag, a fob, remote electronic identifier, wireless key, or operator entry or selection of operator identifier in the user interface 20. During a session in which the identified operator operates the vehicle and activates the automated mode, the electronic data processor 12 is configured to retrieve or access the (previous) stored augmented observed clarity state of the windshield, the (previous) operator-defined wiping intensity, the (previous) estimated rain droplet speed, and the (previous) estimated rain droplet size that are associated with a respective operator identifier. Further, the electronic data processor 12 is configured to control or command the controller 14 if the operator activates the automated mode of the windshield wiper the electronic data processor 12 is configured to control or command the controller 14 with a (present or next) simulated operator-defined wiping intensity derived from applying a learning model: to the (previous) stored augmented observed clarity state of the windshield, to the (previous) operator-defined wiping intensity, to the (previous) estimated rain droplet speed, and to the (previous) rain droplet size (or volume) that are associated with a respective operator identifier and to the (present) observed clarity state of the windshield and to the (present) estimated rain droplet speed, and the (present) estimated rain droplet size or volume, that are associated with a respective operator identifier (e.g., where the previous and present observed clarity states must be commensurate with each other to be used for present control).

Under a fourth technique in an automated mode, an operator identification module 18 is configured to identify the operator of the vehicle based upon an radio frequency identification tag, a fob, remote electronic identifier, wireless key, or operator entry or selection of operator identifier in the user interface 20. During a session in which the identified operator operates the vehicle and activates the automated mode, the electronic data processor 12 is configured to retrieve or to access the (previous) stored augmented observed clarity state of the windshield, and the (previous) operator-defined wiping intensity that are associated with a respective operator identifier. Further, the electronic data processor 12 is configured to control or command the controller 14 based on the (previous) stored augmented observed clarity state of the windshield, and the (previous) operator-defined wiping intensity, and the present observed clarity state of the windshield if the operator activates the automated mode of the windshield wiper.

Under a fifth technique in an automated mode, an operator identification module 18 is configured to identify the operator of the vehicle based upon an radio frequency identification tag, a fob, remote electronic identifier, wireless key, or operator entry or selection of operator identifier in the user interface 20. During a session in which the identified operator operates the vehicle and activates the automated mode, the electronic data processor 12 is configured to retrieve or to accesses the (previous) stored augmented observed clarity of the windshield and the (previous) operator-defined wiping intensity that are associated with a respective operator identifier. Further, the electronic data processor 12 is configured to control or command the controller 14 based on the (previous) stored augmented observed clarity of the windshield, the (previous) operator-defined wiping intensity and the (present) observed clarity of the windshield if the operator activates the automated mode of the windshield wiper and if the windshield clarity detector 28 detects an observed rainfall level or observed moisture level on the windshield that exceeds a threshold rainfall level or threshold observed moisture level.

In one embodiment, the windshield clarity detector 28 comprises a rain sensor or rainfall sensor that is configured to detect the amount of rainfall (e.g., in centimeters or inches) per unit time, the rainfall droplet size, or rainfall volume per unit time (e.g., milliliters or fluid ounces per unit time). In another embodiment, the windshield clarity detector 28 comprises an imaging device or camera 29 facing or aimed outward from the cab of the vehicle toward the windshield. The windshield clarity detector 28 estimates the degree or extent of the following on the windshield: dust or soil dust, water droplets, spray, agricultural material, precipitation, rain, ice or snowfall.

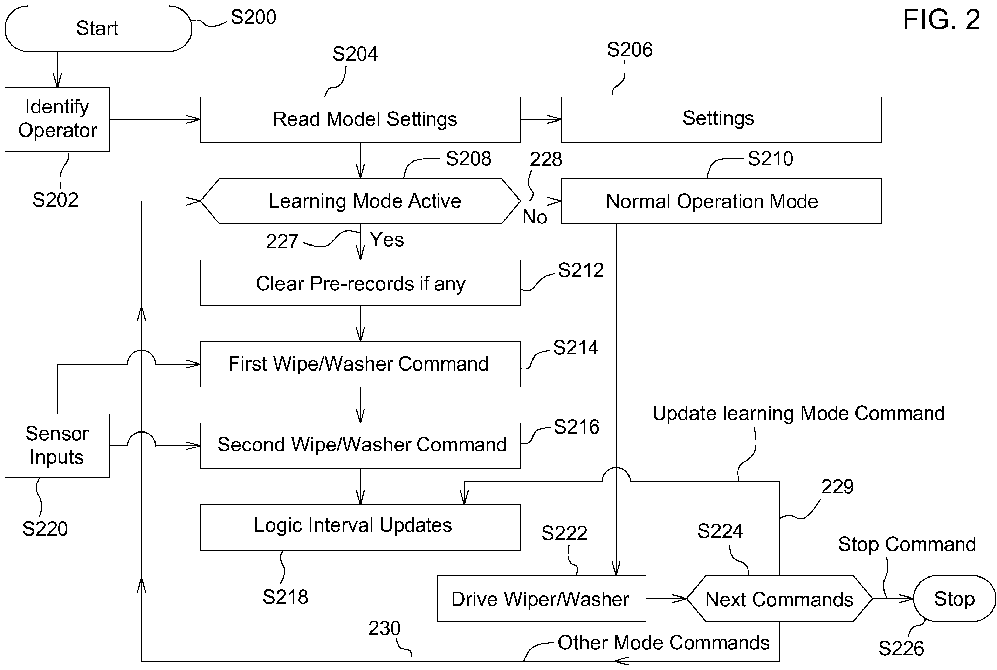

FIG. 2 is a flow chart of one embodiment of a method for controlling a windshield wiper of a vehicle in accordance with the disclosure. The method of FIG. 2 begins in step S200, which is labeled start.

In step S202, the electronic data processor 12 and user interface 20 are used to identify the operator by an operator identifier and associated respective profile that is stored in the data storage device 30. Alternately, the electronic data processor 12 and operator identification module 18 are used to identifier the operator by an operator identifier and an associated respective profile that is stored in the data storage device 30.

In step S204, the electronic data processor 12 is used to read the model settings of an artificial intelligence model or a machine learning model, where the initial settings are stored in the data storage device 30 and are based on the associated respective profile of the identified operator.

In step S208, the electronic data processor 12, alone or together with the mode selector 26, determines whether the system 11 is operating in the learning mode or a normal operating mode, where the normal operating mode may comprise a manual operating mode or an automated operating mode. If the electronic data processor 12, alone or together with the mode selector 26, determines the system 11 is operating in the learning mode, the method continues with step S212. However, if the electronic data processor 12, alone or together with the mode selector 26, determines that the system 11 is operating in the normal mode (e.g., manual mode or the automated operating mode), the method continues with step S210.

In step S212, the electronic data processor 12 initializes, clears, or prepares to overwrite, any allocated memory of data storage device 30 or any data registers of the electronic data processor 12 that are related to recording in the learning mode.

After step S214, the electronic data processor 12 is configured to record the first wiping command for the wiper 50, the washer electric pump 49 or both for a series of one or more sampling intervals, along with one or more sensor inputs for the sampling intervals. For example, the electronic data processor 12 is configured to record the first wiping command for the wiper 50, the washer electric pump 49 or both for a series of one or more sampling intervals that comprise a first sequence of first commands or events, along with the timing (e.g., time stamps or identified time slots in a series of sampling intervals) of the first commands or events with the first sequence.

After step S216, the electronic data processor 12 is configured to record the second wiping command for the wiper 50, the washer electric pump 49 or both for a series of one or more sampling intervals, along with one or more sensor inputs for the sampling intervals. For example, the electronic data processor 12 is configured to record the second wiping command for the wiper 50, the washer electric pump 49 or both for a series of one or more sampling intervals that comprise a second sequence of first commands or events, along with the timing (e.g., time stamps or identified time slots in a series of sampling intervals) of the second commands or events with the second sequence.

In step S218, the electronic data processor 12 is configured to organize, average, augment or assemble one or more of the following: the first wiping command, the second wiping command, the first wiping commands or events with a first sequence, the second wiping commands with a second sequence, wherein the first wiping command and the second wiping command are referenced to a common sequence or reference timeframe, or wherein the first sequence and the second sequence are referenced to the common sequence or reference time frame.

In step S210, the electronic data processor 12, alone or together, with the mode selector 26 determines whether the system 11 is operating in the manual mode or automated mode.

In step S222, the electronic data processor 12 operates or drives the controller 14 to control the electric motor 16 to operate in the manual mode if the manual mode is selected in step S210; or the electronic data processor 12 operates or drives the controller 14 to control the electric motor 16 to operate in the automated mode if the automated mode is selected in step S210.

In step S224, in the automated control mode, the electronic data processor 12 may execute the first wiping command or first sequence of wiping commands or events in step S222, followed by the second wiping command or second sequency of wiping commands or events in step S224. However, in other examples, step S224 can be realized by the operator entering a command into the user interface 20 to select manual mode or to seize control or take control over different manual wiping commands or sequences.

After step S224, the method many continue with step S218 to update the learning mode command in step S218. However, if the electronic data processor 12 selects the learning mode as the next command, the method returns to step S208.

In step S226, the electronic data processor 12 stops the method if the stop command is entered into the user interface 20, or in some alternate embodiments, the electronic data processor 12 stops the method if a timer expires, or if a watchdog count exceeds a threshold count.

Although certain embodiments of a control system and method for controlling a windshield wiper of a vehicle have been described in this disclosure, the scope of the coverage of this disclosure may extend to variants of the systems, methods, processes, examples, systems and concepts disclosed herein. For example, in any patent that may be granted on this disclosure, one or more claims can cover equivalents and variants to the full extent permitted under applicable law, among other things.

## Claims

1. A system for controlling a windshield wiper, the system comprising:
a wiper motor having a rotor;
a controller for controlling the wiper motor consistent with an operator-defined wiping intensity request;
a user interface or switch for inputting the operator-defined wiping intensity request;
in a learning mode, an electronic data processor for learning or recording the operator-defined wiping intensity request associated with a respective operator identifier for a series of sampling intervals during operation of the vehicle;
in the learning mode, a windshield clarity detector configured to detect an observed clarity state of the windshield of a vehicle for the series of respective sampling intervals to augment the operator-defined wiping intensity request associated with a respective operator identifier;
in the learning mode for the series of sampling intervals, the electronic data processor configured to store in a data storage device the augmented observed clarity state of the windshield, and the operator-defined wiping intensity that are associated with a respective operator identifier.

2. The system according to claim 1 wherein the operator-defined wiping intensity comprises any of the following: a rotational speed of the rotor, a wiping active interval or an intermittent duty cycle of the rotor, or a wiper intensity level.

3. The system according to claim 1 further comprising:
a ground speed sensor for estimating a ground speed of the vehicle;
in the learning mode, the electronic data processor associating and storing the estimated ground speed with the respective the operator-defined wiping intensity request associated for the series of sampling intervals.

4. The system according to claim 1 further comprising:
a wind speed sensor for estimating a wind speed around or in the vicinity of the exterior of the vehicle or the windshield;
in the learning mode, the electronic data processor associating and storing the estimated wind speed with the respective the operator-defined wiping intensity request associated for the series of sampling intervals.

5. The system according to claim 1 further comprising:
a rain droplet sensor for estimating a rain droplet speed and rain droplet size or rain droplet volume around or in the vicinity of the exterior of the vehicle or the windshield;
in the learning mode, the electronic data processor associating and storing the estimated rain droplet speed with the respective the operator-defined wiping intensity request associated for the series of sampling intervals.

6. The system according to claim 1 further comprising:
in an automated mode, an operator identification module is configured to identify the operator of the vehicle based upon an radio frequency identification tag, a fob, remote electronic identifier, wireless key, or operator entry or selection of operator identifier in the user interface;
during a session in which the identified operator operates the vehicle and activates the automated mode, the electronic data processor retrieves or accesses the (previous) stored augmented observed clarity state of the windshield, the (previous) operator-defined wiping intensity, and the (previous) estimated ground speed, that are associated with a respective operator identifier; the electronic data processor is configured to control or command the controller with a (present or next) simulated operator-defined wiping intensity derived from applying a learning model: to the (previous) stored augmented observed clarity state of the windshield, to the (previous) operator-defined wiping intensity, and to the (previous) estimated ground speed, that are associated with a respective operator identifier and to the (present) observed clarity state of the windshield and to the (present) estimated ground speed, that are associated with a respective operator identifier.

7. The system according to claim 1 further comprising:
in an automated mode, an operator identification module is configured to identify the operator of the vehicle based upon an radio frequency identification tag, a fob, remote electronic identifier, wireless key, or operator entry or selection of operator identifier in the user interface;
during a session in which the identified operator operates the vehicle and activates the automated mode, the electronic data processor retrieves or accesses the stored (previous) augmented observed clarity state of the windshield, the (previous) operator-defined wiping intensity, and the (previous) estimated wind speed, that are associated with a respective operator identifier; the electronic data processor is configured to control or command the controller with a (present or next) simulated operator-defined wiping intensity derived from applying a learning model: to the (previous) stored augmented observed clarity state of the windshield, to the (previous) operator-defined wiping intensity, and to the (previous) estimated wind speed, that are associated with a respective operator identifier and to the (present) observed clarity state of the windshield and to the (present) estimated wind speed, that are associated with a respective operator identifier.

8. The system according to claim 1 further comprising:
in an automated mode, an operator identification module is configured to identify the operator of the vehicle based upon an radio frequency identification tag, a fob, remote electronic identifier, wireless key, or operator entry or selection of operator identifier in the user interface;
during a session in which the identified operator operates the vehicle and activates the automated mode, the electronic data processor retrieves or accesses the (previous) stored augmented observed clarity state of the windshield, the (previous) operator-defined wiping intensity, the (previous) estimated rain droplet speed, and the (previous) estimated rain droplet size that are associated with a respective operator identifier; the electronic data processor is configured to control or command the controller if the operator activates the automated mode of the windshield wiper the electronic data processor is configured to control or command the controller with a (present or next) simulated operator-defined wiping intensity derived from applying a learning model: to the (previous) stored augmented observed clarity state of the windshield, to the (previous) operator-defined wiping intensity, to the (previous) estimated rain droplet speed, and to the (previous) rain droplet size (or volume) that are associated with a respective operator identifier and to the (present) observed clarity state of the windshield and to the (present) estimated rain droplet speed, and the (present) estimated rain droplet size or volume, that are associated with a respective operator identifier.

9. The system according to claim 1 further comprising:
in an automated mode, an operator identification module is configured to identify the operator of the vehicle based upon an radio frequency identification tag, a fob, remote electronic identifier, wireless key, or operator entry or selection of operator identifier in the user interface;
during a session in which the identified operator operates the vehicle and activates the automated mode, the electronic data processor retrieves or accesses the (previous) stored augmented observed clarity state of the windshield, and the (previous) operator-defined wiping intensity that are associated with a respective operator identifier; the electronic data processor is configured to control or command the controller based on the (previous) stored augmented observed clarity state of the windshield, and the (previous) operator-defined wiping intensity, and the present observed clarity state of the windshield if the operator activates the automated mode of the windshield wiper.

10. The system according to claim 1 further comprising:
in an automated mode, an operator identification module is configured to identify the operator of the vehicle based upon an radio frequency identification tag, a fob, remote electronic identifier, wireless key, or operator entry or selection of operator identifier in the user interface;
during a session in which the identified operator operates the vehicle and activates the automated mode, the electronic data processor retrieves or accesses the (previous) stored augmented observed clarity of the windshield and the (previous) operator-defined wiping intensity that are associated with a respective operator identifier; the electronic data processor is configured to control or command the controller based on the (previous) stored augmented observed clarity of the windshield, the (previous) operator-defined wiping intensity and the (present) observed clarity of the windshield if the operator activates the automated mode of the windshield wiper and if the windshield clarity detector detects an observed rainfall level or observed moisture level on the windshield that exceeds a threshold rainfall level or threshold observed moisture level.

11. The system according to claim 1 wherein a windshield clarity detector comprises a rain sensor or rainfall sensor that is configured to detect the amount of rainfall per unit time, the rainfall droplet size, or rainfall volume per unit time.

12. The system according to claim 1 wherein a windshield clarity detector comprises an imaging device or camera facing or aimed outward from the cab of the vehicle toward the windshield.

13. The system according to claim 1 wherein the windshield clarity detector estimates the degree or extent of the following on the windshield: dust or soil dust, water droplets, spray, agricultural material, precipitation, rain, ice or snowfall.
